Europäisches Patentamt

European Patent Office

Office européen des brevets

(11) Publication number: **0 295 487**
**A1**

## (12) EUROPEAN PATENT APPLICATION

(21) Application number: 88108630.0

(51) Int. Cl.⁴: **B23C 5/20**

(22) Date of filing: 30.05.88

(30) Priority: 15.06.87 US 61369

(43) Date of publication of application:
21.12.88 Bulletin 88/51

(84) Designated Contracting States:
**DE SE**

(71) Applicant: **GTE VALENITE CORPORATION**
**750 Stephenson Highway**
**Troy Michigan 48007-3950(US)**

(72) Inventor: **Pawlik, James**
**39533 Owendale**
**Sterling Heights Michigan 48310(US)**

(74) Representative: **Patentanwälte Grünecker,**
**Kinkeldey, Stockmair & Partner**
**Maximilianstrasse 58**
**D-8000 München 22(DE)**

(54) **Neutral positive geometry insert.**

(57) Indexable cutting inserts constructed of ceramic, silicon nitride or similar brittle material having positive cutting faces each forming an acute angle with adjacent flank wall provided with strengthed cutting edges by means of a primary angle extended from the cutting edge to a depth equivalent to the thickness of stock removal preferably within a range of 0-5° positive intersecting a positive cutting face in the order of 17-20°.

# FIG.1

DIRECTION OF FEED

## NEUTRAL POSITIVE GEOMETRY INSERT

### BACKGROUND OF THE INVENTION

Developments of ceramic, silicon nitride and similar brittle cutting inserts, as distinguished from conventional tungsten carbide for example offer the potential for higher speeds and durability subject to cutting edge fracturing which presents a particular hazard for acute positive rake cutting edges.

It is known in the art, for example as disclosed in U. S. Patent No. 3,930,529, to construct the peripheral flank wall of a positive circular top cutting face insert with a first relatively narrow portion adjacent the cutting edge of the insert which makes a larger included angle with the top cutting face of the insert, and a second somewhat longer portion making a smaller included angle with the top face and extending to a parallel bottom face. The angle of the first relatively narrow portion of the peripheral wall is selected so that when the insert is tilted relative to the work, a peripheral flank clearance angle in the first portion less than the remaining portion of the peripheral wall which will thereby provide a cutting edge more solidly supported rearwardly from the cutting edge. In such case, the circular cutting face is provided with a uniform flat surface held in a rotatable cutter body at a substantial positive angle relative to body axial direction in the range of 25 - 35°.

It is also known in the art, as shown in U. S. Patent No. 3,541,655, to employ inserts having parallel flat surfaces of parallelogram configuration mounted on a cutter body so that trapezoidal side surfaces are presented as indexable positive cutting faces of the insert. As mentioned above, the acute positive angle of the cutting edge of such inserts has been found to be particularly vulnerable to fracture in ceramic, silicon nitride or combinations of relatively brittle inserts.

Positive "lay down" inserts having substantial backup material strength for absorbing cutting pressures have conventionally employed uniform positive cutting face angles, although in some cases "standup" positive insert cutting faces have been provided with a less acute primary angle intersecting with the main positive face angle in order to strengthen the cutting edge.

### SUMMARY OF THE INVENTION

Applicant has discovered that a stronger lay down insert face cutting edge is necessary to obtain full advantage of inserts constructed of brittle material, and can be provided without increasing horsepower by the addition of a neutral or less acute positive rake primary angle at the relatively narrow face cutting edge of, for example, a trapezoidal positive cutting face. Such primary angle intersects the remaining positive angle of the cutting face at a depth no greater than the thickness of stock removal by the individual cutter. Such primary angle may, with beneficial effect, range from neutral to any angle less than the remaining positive angle of the cutting face with a preferred range of 0-5° positive leading to a remaining positive angle of 17-20°. Any attempt to further strengthen the cutting edge through a negative primary angle increases the horsepower by urging the cut material toward the workpiece while employment of a primary angle in the range of 0-5° positive, limited to the cutting thickness of the stock removed, will strengthen the cutting edge without interfering with the chip flow away from the workpiece induced by the remaining substantial positive cutting face angle.

The mounting may be employed on multiple cutter heads for either face milling or counterboring cutter heads with screw attachment through the center of the major mounting faces in pockets which may be directly machined in the body of the heads.

### BRIEF DESCRIPTION OF THE DRAWINGS

Fig. 1 is a schematic side elevation of a face mill illustrating the location of a single cutter insert relative to a fragmentary workpiece;

Fig. 2 is a schematic end elevation of the face mill shown in Fig. 1 illustrating the relative peripheral location of a pair of adjacent cutter inserts;

Fig. 3 is a schematic side elevation of a boring cutter illustrating the location of a single cutter insert relative to a fragmentary workpiece;

Fig. 4 is a schematic end elevation of the boring cutter shown in Fig. 3 illustrating the relative peripheral location of a pair of adjacent cutter inserts;

Fig. 5 is a schematic mounting face view of a cutter insert having parallel parallelogram principal mounting faces and trapezoidal side cutting faces;

Fig. 6 is a view of a side cutting face taken along the line 6-6 of Fig. 5;

Fig. 7 is a view of an alternative side cutting face taken along the line 7-7 of Fig. 5;

Fig. 8 is an enlarged fragmentary view of a cutting corner of Fig. 7 showing the primary angle relative to the remaining clearance angle of the present neutral/positive geometry insert.

## DETAILED DESCRIPTION OF PREFERRED EMBODIMENT

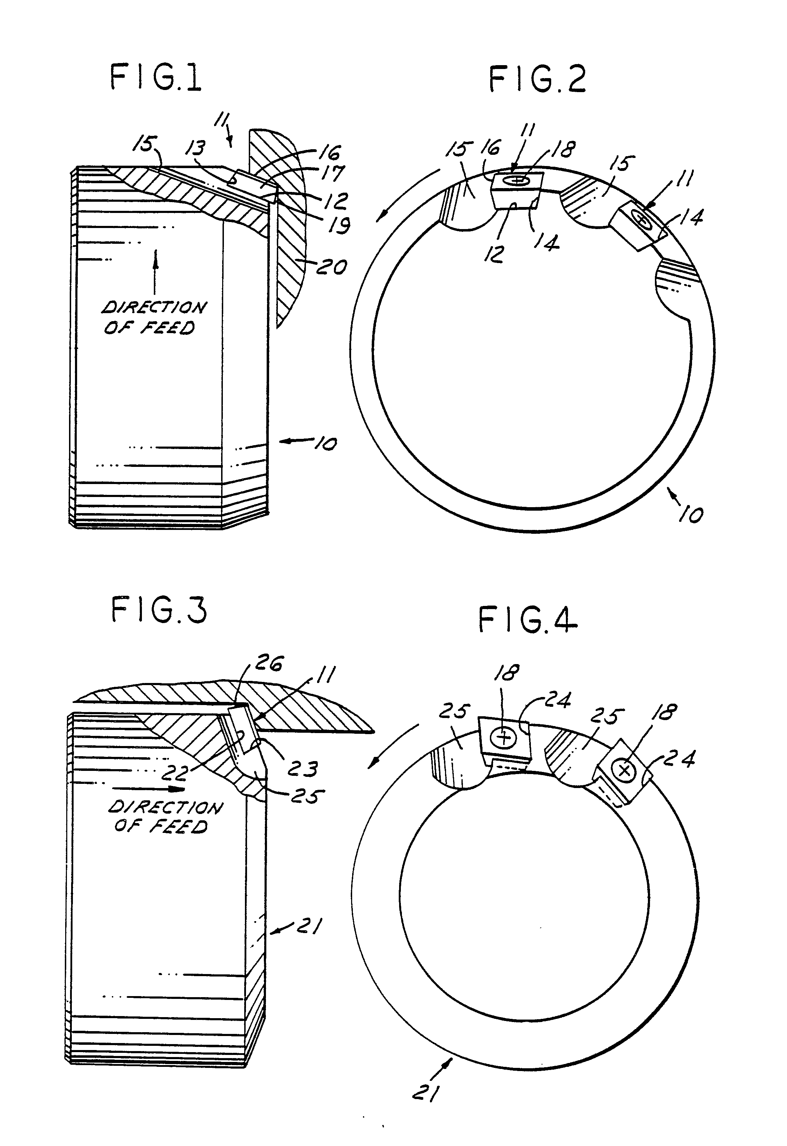

With reference to Figs. 1 and 2, face mill 10 is provided with a plurality of equally spaced peripheral cutter inserts 11 each located in a pocket provided with a bottom seat 12, side wall 13 and backup wall 14. Gullet 15 ahead of each pocket accommodates chip flow from cutting edge 16 of cutting face 17 hereinafter described in detail. Each insert is secured in its pocket in any of four indexable positions by a central screw 18 providing "lay down" side edge cutter action with seat angularity and insert geometry configuration providing side relief clearance 19 in the direction of feed relative to workpiece 20 and a generally positive face 17 for both radial and axial rake angles.

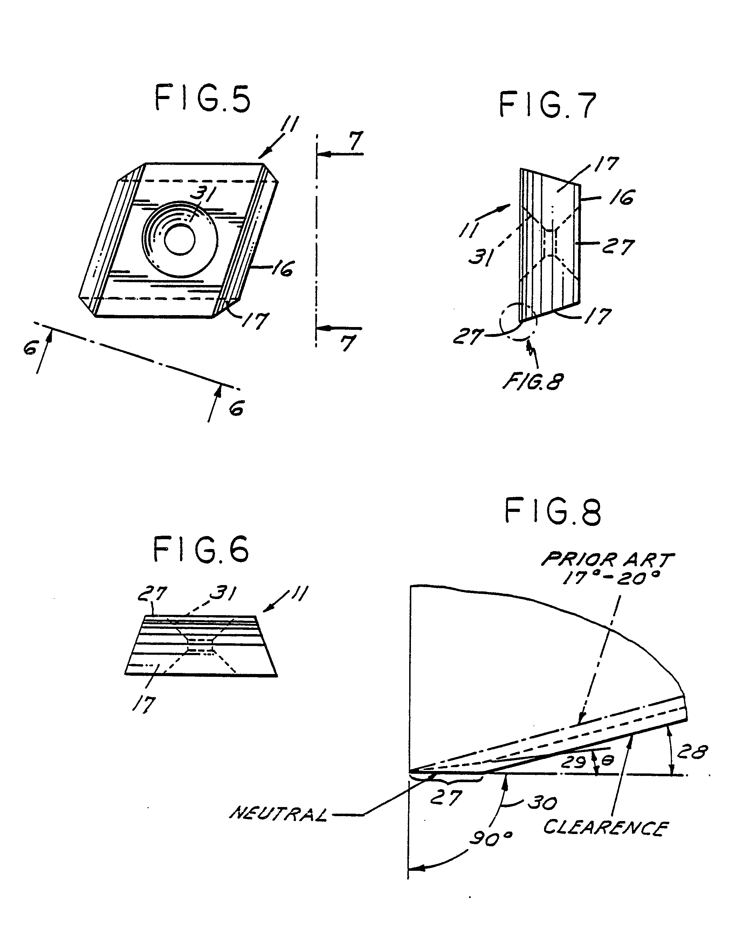

With reference to Figs. 3 and 4, the same cutter insert 11 is mounted in counterboring cutter 21 having insert pockets each including mounting seat 22, side wall 23 and backup wall 24 with adjacent chip gullet 25. Again, pocket angularity and trapezoidal insert geometry provides side clearance 26 in the direction of feed and positive cutting action relative to both radial and axial rake for use of the insert in counterboring as in the case of face milling previously described. Again, central screws 18 are employed in securing the inserts in their respective pockets.

With reference to Figs. 5-8, the parallel parallelogram faces and trapezoidal geometry of cutter insert 11 per se is illustrated. Such geometry is known in the art in general configuration as disclosed in U. S. Patent No. 3,541,655 with the exception of applicant's addition of the primary angle 27 on each cutting face extending from the cutting edge to a depth preferably no greater than stock removal cutting chip thickness at a point of intersection with the positive clearance angle 28 of the main cutting face 17 preferably in the order of 17-20° positive. The primary angle 27 shown neutral in full line and dotted line angle designated " $\theta$ " at 29 may be any angle from 90° as shown at 30 to an angle, $\theta$ 29, which is less than the clearance angle 28, again with a preferred range of 0-5° positive.

The parallelogram/trapezoid configuration provides four index positions for each insert in either face mill or boring cutter application through the provision of double taper screw hole 31 in the insert to accommodate two indexing positions on either side.

The provision of a less acute primary angle effectively strengthens the cutting edge without increasing the horsepower required to form the cut and without losing the characteristics of a substantially positive cutting action. The improvement is particularly useful on current brittle materials such as ceramics, silicon nitrides or combinations thereof which can be employed with higher cutting speeds and durability if properly protected against edge fracturing incident to the conventional unqualified acute cutting edge angle of a positive cutting face combined with a flank clearance angle. In addition to greater strength, the primary angle provides quieter, smoother and better size control cutting action because the edge is more durable.

**Claims**

1. A "lay down" ceramic, silicon nitride or similar brittle cutting insert having a positive angle cutting face extending between two principal parallel surface faces with the addition of a relatively less acute primary angle extending from the cutting edge to an intersection with said positive angle.

2. A cutting insert as set forth in claim 1 wherein said primary angle extends in a range between neutral and less acute than said positive angle.

3. A cutting insert as set forth in claim 2 wherein said primary angle extends to an intersection with said positive angle corresponding to the maximum design depth of stock removal chip thickness.

4. A cutting insert as set forth in claim 2 including a preferred positive angle within the range of 17-20°.

5. A cutting insert as set forth in claim 4 including a primary angle within the range of 0-5° positive.

6. A cutting insert as set forth in claim 1 provided with indexable parallel planar mounting faces.

7. A cutting insert as set forth in claim 1 wherein a plurality of indexable cutting faces extend between two principal parallel mounting faces

8. The cutting insert of claim 7 including two principal parallel surfaces of equal parallelogram configuration and four indexable cutting face surfaces of equal trapezoid configuration, the narrower edge of each pair of parallel trapezoid edges forming a positive rake cutting edge having said primary angle.

9. A cutting insert having a pair of parallel parallelogram mounting faces, a central double taper mounting screw hole extending through said insert normal to said mounting faces, and four indexable trapezoidal cutting faces, the narrower of each pair of parallel trapezoid edges forming a cutting edge of a positive angle cutting face, and a relatively less acute primary angle extending from the cutting edge to an intersection with said positive angle, said intersection being located at a depth from said cutting edge corresponding to a design depth for maximum stock removal chip thickness.

10. A cutting insert as set forth in claim 9 including a positive angle in the order of 17-20° and a primary angle in the order of 0-5° positive.

4

# FIG.1

DIRECTION
OF FEED

# FIG.2

# FIG.3

DIRECTION
OF FEED

# FIG.4

# FIG.5

# FIG.7

# FIG.6

# FIG.8

PRIOR ART
17°-20°

NEUTRAL

CLEARENCE

90°

| | | **DOCUMENTS CONSIDERED TO BE RELEVANT** | | EP 88108630.0 |
|---|---|---|---|---|
| Category | | Citation of document with indication, where appropriate, of relevant passages | Relevant to claim | CLASSIFICATION OF THE APPLICATION (Int. Cl.4) |
| A | | DE - A1 - 2 938 381 (VUNAR) <br> * Totality * <br> -- | 1-7 | B 23 C 5/20 |
| A | | FR - A - 2 172 542 (BALLESTEROS) <br> * Fig. 6 * <br> -- | 1-7 | |
| D,A | | US - A - 3 930 529 (FAWCETT) <br> * Fig. 7 * <br> -- | 1 | |
| D,A | | US - A - 3 541 655 (STIER) <br> * Fig. 1-13 * <br> -- | 1 | |
| A | | FR - A1 - 2 312 325 (KENNAMETAL) <br> * Fig. 1 * <br> ---- | 1 | |

TECHNICAL FIELDS SEARCHED (Int. Cl.4)

B 23 C 5/00

The present search report has been drawn up for all claims

| Place of search | Date of completion of the search | Examiner |
|---|---|---|
| VIENNA | 31-08-1988 | FUCHS |